# EUROPÄISCHE PATENTANMELDUNG

(11) **EP 2 700 682 A1**
(43) Veröffentlichungstag der Anmeldung: **26.02.2014**
(21) Anmeldenummer: 13180968.3
(22) Anmeldetag: 20.08.2013
(51) Int. Cl.: C09D 183/00, C08K 3/36, B22D 41/02, F28F 13/18

(54) **Wärmeableitende Beschichtung, insbesondere für Gießereipfannen oder Wärmetauscher**

(30) Priorität: 21.08.2012 DE 102012107686; 14.09.2012 DE 102012108602
(71) Anmelder: Lungmuß, Uwe, 44141 Dortmund (DE)
(72) Erfinder: Lungmuß, Uwe, 44141 Dortmund (DE)
(74) Vertreter: Michalski Hüttermann & Partner Patentanwälte

(57) **Zusammenfassung**

Eine Beschichtungszusammensetzung umfasst ein Silikonharz und weiterhin Sand. Weiterhin umfasst ein erfindungsgemäßer Behälter für Metallschmelzen eine nach Außen gerichtete äußere Oberfläche, wobei die äußere Oberfläche zumindest teilweise mit einer Beschichtung versehen ist, welche ein polymeres Bindemittel und Sand umfasst. Die Erfindung betrifft weiterhin ein Verfahren zur Herstellung eines Behälters für Metallschmelzen, umfassend den Schritt des Auftragens einer Beschichtungszusammensetzung auf zumindest einen Teil einer nach Außen gerichteten äußeren Oberfläche eines Behälters für Metallschmelzen, wobei die Beschichtungszusammensetzung ein Polymerharz und Sand umfasst sowie die Verwendung einer Beschichtungszusammensetzung umfassend ein Polymerharz und Sand zur Beeinflussung der Wärmeabfuhr eines Behälters für Metallschmelzen. Ein weiterer Gegenstand der Erfindung ist ein Wärmetauscher mit einer zur Abgabe von Wärme an ein Kühlmedium eingerichtete Oberfläche, wobei diese Oberfläche zumindest teilweise mit einer wärmeabführenden Beschichtung versehen ist. Sie betrifft weiterhin ein Verfahren zur Herstellung eines solchen Wärmetauschers sowie die Verwendung einer Beschichtungszusammensetzung umfassend ein Polymerharz und Sand zur Beeinflussung der Wärmeabfuhr und/oder der Beeinflussung der Außentemperatur eines Wärmetauschers.

## Beschreibung

Die vorliegende Erfindung betrifft eine Beschichtungszusammensetzung, welche sich insbesondere für Gießereipfannen eignet. Sie betrifft weiterhin mit dieser Beschichtungszusammensetzung versehene Behälter und die Verwendung dieser Beschichtungszusammensetzung zur Beeinflussung der Wärmeabstrahlung eines Behälters. Ein weiterer Gegenstand der Erfindung ist ein Wärmetauscher mit einer zur Abgabe von Wärme an ein Kühlmedium eingerichtete Oberfläche, wobei diese Oberfläche zumindest teilweise mit einer wärmeabführenden Beschichtung versehen ist. Sie betrifft weiterhin ein Verfahren zur Herstellung eines solchen Wärmetauschers sowie die Verwendung einer Beschichtungszusammensetzung umfassend ein Polymerharz und Sand zur Beeinflussung der Wärmeabfuhr und/oder der Beeinflussung der Außentemperatur eines Wärmetauschers.

In metallurgischen Betrieben werden Gießpfannen für Metallschmelzen eingesetzt, welche naturgemäß hohen Temperaturen ausgesetzt sind. Dieses gilt sowohl für die Zeit, in der die Gießpfannen die Metallschmelze beinhalten, als auch für die Zeit nach dem Entleeren der Gießpfanne.

Eine verbreitete Außenbeschichtung von solchen Gießpfannen für Korrosionsschutz- und andere Zwecke sind sogenannte Silberbronzen (Römpp Lexikon - Lacke und Druckfarben, Georg Thieme Verlag 1988, S. 378) auf der Basis von Silikonharzlacken. WO 97/06220 A1 beispielsweise offenbart Beschichtungsmischungen, enthaltend im wasserfreien Zustand mindestens ein Polysiloxan, mindestens einen reaktiven anorganischen Füllstoff, mindestens ein als Schmelze filmbildendes anorganisches Material und mindestens ein reaktionsfähiges (Oligo)silan, ein Verfahren zur Herstellung sowie deren Verwendung.

DE 2447813 A1 offenbart ein Verfahren zur Ausstattung eines metallurgischen Behälters mit einer hitzebeständigen Auskleidung bei erhöhten Temperaturen. Die Innenwandungen des Behälters werden mit einem hitzebeständigen Stoff aus angefeuchtetem Material versehen, wenn der Behälter sich auf einer Temperatur zwischen 66 °C und 1649 °C befindet, wobei der trockene hitzebeständige Stoff im Wesentlichen aus 0,25 bis etwa 4 Gewichtsprozent eines Bindemittels mit einem Schmelzpunkt von etwa 66 °C ist 104 °C und etwa 96-99,5 Gewichtsprozent Partikeln eines im Wesentlichen von Al₂O₃ und/oder SiO₂ gebildeten hitzebeständigen Materials besteht. Dem trockenen Stoff werden nachträglich etwa 4-6 Gewichtsprozent Wasser zugesetzt, um den hitzebeständigen Stoff aus angeforderte Material zu erhalten. Sodann wird unter Auswertung der fühlbaren Wärme in der Innenwandung des Behälters das osmotisch verteilte Bindemittel innerhalb der Innenfläche zum Schmelzen gebracht, so dass eine klebrige Masse gebildet wird, an der die Partikel des hitzebeständigen Materials haften und man lässt abschließend die Lage eine Auskleidung aus massivem Material bilden.

DE 2754520 B1 betrifft ein Gefäß zur Aufnahme von Metallschmelze mit einem äußeren Metallgehäuse, einer an das Gehäuse angrenzenden, verhältnismäßig dauerhaften Auskleidung aus feuerfestem Material und eine angrenzend an die verhältnismäßig dauerhafte Auskleidung angrenzenden inneren verbrauchbaren Auskleidung, die aus einer Mehrzahl von Platten aus feuerfestem, wärmeisolierendem Material hergestellt ist. Hinter wenigstens einigen der Verbindungen zwischen benachbarten Platten des feuerfesten wärmeisolierenden Materials sind Kanäle ausgebildet, die mit feuerfestem Material gefüllt sind.

Wärmetauscher kommen in vielerlei Anwendungen für Heiz- und Kühlungszwecke zum Einsatz. Beispielhaft sei das in US 2009/0165838 A1 beschriebene Solarpaneel genannt, bei dem Rohrleitungen mit einem Wärmetauschermedium mit einem Träger verklebt sind. Der Klebstoff wird als Wärmeübertragungsklebstoff beschrieben und beinhaltet ein Acrylharz und Silika-Sand und benötigt nicht die Zugabe von Wasser.

Die Verbesserung von Wärmeübertragungsprozessen in Wärmetauschern ist aus technischen und wirtschaftlichen Gründen eine ständige Herausforderung. Wünschenswert wären auch verbesserte Wärmetauscher, welche ohne aufwendige Modifikationen oder bauliche Veränderungen auch auf der Basis von bereits bestehenden und in eine Anlage eingebauten Wärmetauschern erhalten werden können.

Die vorliegende Erfindung hat sich daher insbesondere die Aufgabe gestellt, eine Beschichtungszusammensetzung und eine hieraus erhaltene Beschichtung bereitzustellen, welche mittels einer Erhöhung der Wärmeabstrahlung des beschichteten Körpers zu einer erhöhten Wärmeabfuhr und somit zu einem rascheren Abkühlen des Körpers führt.

Erfindungsgemäß gelöst wurde diese Aufgabe durch eine Beschichtungszusammensetzung, umfassend ein Silikonharz, wobei die Beschichtungszusammensetzung weiterhin Sand umfasst.

Überraschenderweise wurde gefunden, dass mit Beschichtungen auf der Basis solcher Beschichtungszusammensetzungen versehene heiße Behälter schneller abkühlen als unbeschichtete Behälter. Weiterhin kann erreicht werden, dass sich die Außenseite eines solchen Behälters weniger stark aufheizt.

Im Rahmen der vorliegenden Erfindung bezeichnet der Begriff "Beschichtungszusammensetzung" eine noch nicht ausgehärtete Zusammensetzung, welche noch nicht beispielsweise durch Trocknung oder Quervernetzung zu einem Feststoff geworden ist. Insofern ist eine "Beschichtungszusammensetzung" noch verarbeitbar.

Im Gegensatz dazu bezeichnet der Begriff "Beschichtung", welcher in Zusammenhang mit einem weiteren Aspekt der Erfindung später behandelt werden wird, die auf eine Oberfläche aufgetragene Beschichtungszusammensetzung nach Umwandlung durch physikalische und/oder chemische Prozesse wie Trocknung, Erstarrung, Polymerisation, Quervernetzung und/oder Verkieselung.

Der Begriff "Sand" im Rahmen der vorliegenden Erfindung ist zunächst nicht auf bestimmte Gesteine oder Mineralien eingeschränkt. In Anlehnung an die Definitionen der Normen EN 12620 und der EN 13139 sind unter "Sand" Gesteinskörnungen aus mineralischen Vorkommen zu verstehen, wobei "Sand" eine Korngrößenbezeichnung darstellt. Im vorliegenden Fall beträgt für "Sand" die Körnung gemäß DIN EN 933, ausgedrückt durch zwei Begrenzungssiebe d/D, 0/4. Dieses entspricht einem Korngrößenbereich von 0 mm bis maximal 4 mm.

In der nachfolgenden Tabelle sind die Kornzusammensetzungen für die feinen Gesteinskörnungen 0/1, 0/2 und 0/4 in den Kategorien der Anforderungen G_{F} 85 und f₃ zusammengestellt. G_{F}85 bedeutet, dass der Siebdurchgang des Größtkorns (G_{D}) beträgt bei feinen Gesteinskörnungen (_{F}) mindestens 85 % Massenanteil; f₃ bedeutet Siebdurchgang des Feinanteils (_{f}). Diese Anforderungen gelten gemäß EN 13139 auch für die Gesteinskörnungen für Mörtel in der Kategorie 1.

| **Korngruppe** | **Grenzwerte (absolut) als Massenanteil in Prozent für den Siebdurchgang durch die Prüfsiebe** | | | | | | | | | **Kategorie** | |
|---|---|---|---|---|---|---|---|---|---|---|---|
| | **0,063** | **0,25** | **1** | **1,4** | **2** | **2,8** | **4** | **5,6** | **8** | **G_{D}** | **f** |
| 0/1 | 3 | | 85-99 | 95- | 100 | | | | | G_{F}85 | f₃ |
| 0/2 | 3 | | | | 85-99 | 95-100 | | | | G_{F}85 | f₃ |
| 0/4 | 3 | | | | | | 85-99 | 95-100 | 100 | G_{F}85 | f₃ |

In der Norm DIN EN 933 sind insbesondere die Teile 1 (Bestimmung der Korngrößenverteilung - Siebverfahren) und 2 (Bestimmung der Korngrößenverteilung - Analysensiebe, Nennmaße der Sieböffnungen) von Interesse.

"Silikonharze" (Poly(organo)siloxane) sind dem Fachmann geläufig. Vorzugsweise handelt es sich hierbei um Silikonharzlacke, welche nach der Aushärtung durch Abspaltung von Seitengruppen ein stabiles SiO₂-Gerüst bilden und somit in besonderem Maße für Hochtemperaturanwendungen geeignet sind.

Weitere Aspekte und Ausführungsformen der vorliegenden Erfindung werden nachfolgend beschrieben. Sie können beliebig miteinander kombiniert werden, sofern sich aus dem Kontext nicht das Gegenteil ergibt.

In einer Ausführungsform der erfindungsgemäßen Beschichtungszusammensetzung ist der Sand ein Quarz-, Basalt-, Dolomit-, Feldspat-, Glimmer-, Ilmenit-, Kalzit-, Bauxit-, Andalusit-, Zirkoniumsilikat-, Zirkoniumdioxid-, Magnesit-, Korund-, Spinell-, Siliciumcarbid- und/oder Siliciumnitrid-Sand. Die Angabe des Minerals bezeichnet die Hauptkomponente des Sandes. So enthält beispielsweise ein Quarzsand ≥ 50 Gewichts-%, vorzugsweise > 85 Gewichts-% und besonders bevorzugt > 95 Gewichts-% Quarz. Aufgrund der einfachen Verfügbarkeit und der chemischen Verträglichkeit mit Silikonharz-Lacken ist Quarzsand der bevorzugte Sand.

In einer weiteren Ausführungsform der erfindungsgemäßen weist der Sand eine Körnung gemäß DIN EN 933, ausgedrückt durch zwei Begrenzungssiebe d/D, von 0/2 auf. Vorzugsweise beträgt die Körnung 0/1.

In einer weiteren Ausführungsform der erfindungsgemäßen Beschichtungszusammensetzung weist der Sand einen D₅₀-Wert der Korngrößenverteilung, ermittelt gemäß DIN EN 933, von ≥ 0,5 mm bis ≤ 1,5 mm auf. Der D₅₀-Wert gibt hierbei die Maschenweite eines Siebes an, bei der 50 Gewichts-% einer Sand-Probe das Sieb passieren. Dieser Wert kann aus einer Korngrößenverteilungskurve abgelesen werden. Vorzugsweise beträgt dieser D₅₀-Wert ≥ 0,8 mm bis ≤ 1,2 mm.

In einer weiteren Ausführungsform der erfindungsgemäßen Beschichtungszusammensetzung ist das Silikonharz ein Methylsilikonharz, Phenylsilikonharz oder Methylphenylsilikonharz.

In einer weiteren Ausführungsform der erfindungsgemäßen Beschichtungszusammensetzung liegt das Gewichtsverhältnis von Sand zu Silikonharz in einem Bereich von ≥ 1:1 bis ≤ 1,5:1. Ein bevorzugter Bereich für das Gewichtsverhältnis ist ≥ 1,1:1 bis ≤ 1,4:1.

In einer weiteren Ausführungsform der erfindungsgemäßen Beschichtungszusammensetzung ist die Beschichtungszusammensetzung schwarz eingefärbt. Auch dieses erhöht die Wärmeabfuhr, da im wörtlichen Sinne ein schwarzer Strahler vorliegt.

In einer weiteren Ausführungsform der erfindungsgemäßen Beschichtungszusammensetzung beträgt in der Beschichtungszusammensetzung der Gesamtemissionsgrad in Richtung der Flächennormalen εₙ ≥ 0,85. Vorzugsweise beträgt dieser Wert, insbesondere bei matten Silikonharzlacken, ≥ 0,95.

Ein weiterer Aspekt der vorliegenden Erfindung ist ein Behälter für Metallschmelzen, umfassend eine nach Außen gerichtete äußere Oberfläche, wobei die äußere Oberfläche zumindest teilweise mit einer Beschichtung versehen ist, welche ein polymeres Bindemittel und Sand umfasst. Wie bereits im Zusammenhang mit der Beschichtungszusammensetzung beschrieben kann die Wärmeabfuhr eines derart beschichteten Behälters erhöht werden und die Aufheizung der Außenseite verringert werden. Solche Behälter können insbesondere für Eisen-, Stahl- und Nichteisenmetallschmelzen eingesetzt werden.

Beispiele für polymere Bindemittel sind Polyurethane und, vorzugsweise, Polysiloxane oder Folgeprodukte der Reaktion von Polysiloxanen bei Temperaturen von über 200 °C, über 300 °C oder über 400 °C (Bildung von stabilen SiO₂-Gerüsten).

In einer Ausführungsform des erfindungsgemäßen Behälters ist die Beschichtung aus einer Beschichtungszusammensetzung gemäß der vorliegenden Erfindung erhältlich. Zur Vermeidung unnötiger Wiederholungen wird auf die vorangegangenen Ausführungen zur Beschichtungszusammensetzung verwiesen, auf welche in vollem Umfang Bezug genommen wird. Mit eingeschlossen ist der Fall, dass die Beschichtung durch Erhitzen auf Temperaturen von über 200 °C, über 300 °C oder über 400 °C (Bildung von stabilen SiO₂-Gerüsten) erhalten wird.

In einer weiteren Ausführungsform des erfindungsgemäßen Behälters weist die Beschichtung eine Schichtdicke von ≥ 10 µm bis ≤ 500 µm auf, wobei der Sand nicht in die Bestimmung dieser Schichtdicke einbezogen wird. Vorzugsweise ist die Schichtdicke ≥ 100 µm bis ≤ 400 µm.

In einer weiteren Ausführungsform des erfindungsgemäßen Behälters ist der Behälter eine Gießpfanne, ein Vergießofen, eine Abstichrinne, ein Vorherd oder ein Kupolofen.

Die vorliegende Erfindung betrifft weiterhin ein Verfahren zur Herstellung eines Behälters für Metallschmelzen, umfassend den Schritt des Auftragens einer Beschichtungszusammensetzung auf zumindest einen Teil einer nach Außen gerichteten äußeren Oberfläche eines Behälters für Metallschmelzen, wobei die Beschichtungszusammensetzung ein Polymerharz und Sand umfasst.

Vorzugsweise ist die Beschichtungszusammensetzung eine wie zuvor beschriebene erfindungsgemäße Beschichtungszusammensetzung. Das Verfahren kann weiterhin den Schritt des Einbrennens der Beschichtungszusammensetzung enthalten, insbesondere im Zusammenhang mit Silikonharz-Bindemitteln.

Ebenfalls Gegenstand der vorliegenden Erfindung ist die Verwendung einer Beschichtungszusammensetzung umfassend ein Polymerharz und Sand zur Beeinflussung der Wärmeabfuhr und/oder der Beeinflussung der Außentemperatur eines Behälters für Metallschmelzen. Auch hier ist bevorzugt, dass die Beschichtungszusammensetzung auf zumindest einen Teil einer nach Außen gerichteten äußeren Oberfläche des Behälters aufgetragen wird. Die gewünschte Beeinflussung der Wärmeabfuhr ist vorzugsweise eine Erhöhung der Wärmeabfuhr. Die gewünschte Beeinflussung der Außentemperatur liegt vorzugsweise darin, dass sich die Temperatur der äußeren Oberfläche des Behälters gar nicht erst so stark wie im nicht erfindungsgemäßen Vergleichsfall erhöht, dass sich die Außenseite des Behälters folglich gar nicht erst so stark aufheizt.

In einer Ausführungsform der erfindungsgemäßen Verwendung umfasst die Beschichtungszusammensetzung eine Beschichtungszusammensetzung gemäß der vorliegenden Erfindung.

Mit eingeschlossen bei der erfindungsgemäßen Verwendung ist auch, dass die Beschichtungszusammensetzung durch Erhitzen auf Temperaturen von über 200 °C, über 300 °C oder über 400 °C (Bildung von stabilen SiO₂-Gerüsten) umgewandelt wird.

Die vorliegende Erfindung betrifft weiterhin einen Wärmetauscher, umfassend eine zur Abgabe von Wärme an ein Kühlmedium eingerichtete Oberfläche, wobei diese Oberfläche zumindest teilweise mit einer Beschichtung versehen ist, welche ein Silikonharz und Sand umfasst und wobei der Sand einen D₅₀-Wert der Korngrößenverteilung, ermittelt gemäß DIN EN 933, von ≥ 0,3 mm aufweist.

Überraschenderweise wurde gefunden, dass mit solchen Beschichtungen versehene Wärmetauscher einen schnelleren Wärmeübergang und damit eine effektivere Kühlung als nicht beschichtete Wärmetauscher zeigen.

Im erfindungsgemäßen Wärmetauscher ist eine beschichtete Oberfläche vorgesehen, welche zur Abgabe von Wärme an ein Kühlmedium eingerichtet ist. Im einfachsten Fall ist dieses eine mit der Umgebung, d.h. Luft, in Kontakt stehende Oberfläche. Beispiele hierfür sind Kühlrippen, welche an Motoren, integrierten Schaltkreisen und dergleichen angebracht sind. Das Kühlmedium kann aber auch eine Kühlflüssigkeit sein. Der Kontakt mit dem Kühlmedium kann unmittelbar oder aber auch mittelbar, beispielsweise im Sinne eines Gegenstrom- oder Kreuzstromwärmetauschers, erfolgen.

Der erfindungsgemäße Wärmetauscher unterscheidet sich von Behältern, in denen eine Metallschmelze aufbewahrt werden kann. Insbesondere ist der Wärmetauscher keine Gießpfanne, ein Vergießofen, Abstichrinne, Vorherd oder Kupolofen.

In einer Ausführungsform ist der Wärmetauscher zur Aufnahme eines strömenden Fluids eingerichtet. Das strömende Fluid kann beispielsweise Heizungswasser, Öl in einem Kühlkreislauf oder ein Reaktionsgemisch in einer chemischen Anlage sein.

In einer weiteren Ausführungsform ist der Wärmetauscher ausgewählt aus der Gruppe: Kühlbleche, vorzugsweise Kühlbleche für Motoren oder elektronische Bauelemente; Wasserleitungen, vorzugsweise Wasserleitungen für Wärmetauscher; Abkühlbecken; Abgasleitungen hinter Schmelzaggregaten.

In einer weiteren Ausführungsform des Wärmetauschers ist der Sand ein Quarz-, Basalt-, Dolomit-, Feldspat-, Glimmer-, Ilmenit-, Kalzit-, Bauxit-, Andalusit-, Zirkoniumsilikat-, Zirkoniumdioxid-, Magnesit-, Korund-, Spinell-, Siliciumcarbid- und/oder Siliciumnitrid-Sand. Die Angabe des Minerals bezeichnet die Hauptkomponente des Sandes. So enthält beispielsweise ein Quarzsand ≥ 50 Gewichts-%, vorzugsweise > 85 Gewichts-% und besonders bevorzugt > 95 Gewichts-% Quarz. Aufgrund der einfachen Verfügbarkeit und der chemischen Verträglichkeit mit Silikonharz-Lacken ist Quarzsand der bevorzugte Sand.

In einer weiteren Ausführungsform des Wärmetauschers weist der Sand eine Körnung gemäß DIN EN 933, ausgedrückt durch zwei Begrenzungssiebe d/D, von 0/2 aufweist. Vorzugsweise beträgt die Körnung 0/1.

In einer weiteren Ausführungsform des Wärmetauschers weist der Sand einen D₅₀-Wert der Korngrößenverteilung, ermittelt gemäß DIN EN 933, von ≥ 0,8 mm bis ≤ 1,2 mm auf.

In einer weiteren Ausführungsform des Wärmetauschers ist das Silikonharz ein Methylsilikonharz, Phenylsilikonharz oder Methylphenylsilikonharz.

In einer weiteren Ausführungsform des Wärmetauschers liegt das Gewichtsverhältnis von Sand zu polymerem Bindemittel in einem Bereich von ≥ 1:1 bis ≤ 1,5:1 liegt. Ein bevorzugter Bereich für das Gewichtsverhältnis ist ≥ 1,1:1 bis ≤ 1,4:1. Insbesondere kann das Gewichtsverhältnis von Sand zu Silikonharz in einem Bereich von ≥ 1:1 bis ≤ 1,5:1, vorzugsweise > 1,1:1 bis ≤ 1,4:1, liegen.

In einer weiteren Ausführungsform des Wärmetauschers ist die Beschichtung schwarz eingefärbt. Auch dieses erhöht die Wärmeabfuhr, da im wörtlichen Sinne ein schwarzer Strahler vorliegt.

In einer weiteren Ausführungsform des Wärmetauschers beträgt in der Beschichtung der Gesamtemissionsgrad in Richtung der Flächennormalen εₙ ≥ 0,85 beträgt. Vorzugsweise beträgt dieser Wert, insbesondere bei matten Silikonharzlacken, ≥ 0,95.

In einer weiteren Ausführungsform des Wärmetauschers weist die Beschichtung eine Schichtdicke von ≥ 10 µm bis ≤ 500 µm auf, wobei der Sand nicht in die Bestimmung dieser Schichtdicke einbezogen wird. Vorzugsweise ist die Schichtdicke ≥ 100 µm bis ≤ 400 µm.

Ein weiterer Aspekt der vorliegenden Erfindung ist ein Verfahren zur Herstellung eines Wärmetauschers, umfassend den Schritt des Auftragens einer Beschichtungszusammensetzung auf zumindest einen Teil einer zur Abgabe von Wärme an ein Kühlmedium eingerichteten Oberfläche, wobei die Beschichtungszusammensetzung ein Silikonharz und Sand mit einem D₅₀-Wert der Korngrößenverteilung, ermittelt gemäß DIN EN 933, von ≥ 0,3 mm umfasst. Zur Vermeidung unnötiger Wiederholungen wird auf die vorangegangenen Ausführungen zur Beschichtungszusammensetzung verwiesen, auf welche in vollem Umfang Bezug genommen wird. Mit eingeschlossen ist der Fall, dass die Beschichtung durch Erhitzen auf Temperaturen von über 200 °C, über 300 °C oder über 400 °C erhalten wird.

Die vorliegende Erfindung betrifft ebenfalls die Verwendung einer Beschichtungszusammensetzung umfassend ein Silikonharz und Sand mit einem D₅₀-Wert der Korngrößenverteilung, ermittelt gemäß DIN EN 933, von ≥ 0,3 mm zur Beeinflussung der Wärmeabfuhr und/oder der Beeinflussung der Außentemperatur eines Wärmetauschers. Zur Vermeidung unnötiger Wiederholungen wird auch hier auf die vorangegangenen Ausführungen zur Beschichtungszusammensetzung verwiesen, auf welche in vollem Umfang Bezug genommen wird. Mit eingeschlossen ist der Fall, dass die Beschichtung durch Erhitzen auf Temperaturen von über 200 °C, über 300 °C oder über 400 °C erhalten wird.

Die vorliegende Erfindung wird in Verbindung mit den nachfolgenden Figuren und Beispielen weiter erläutert, ohne jedoch darauf beschränkt zu sein. Es zeigen:
- FIG. 1: eine Versuchsanordnung gemäß Beispiel 1
- FIG. 2: eine Versuchsanordnung gemäß Beispiel 2

### Beispiel 1

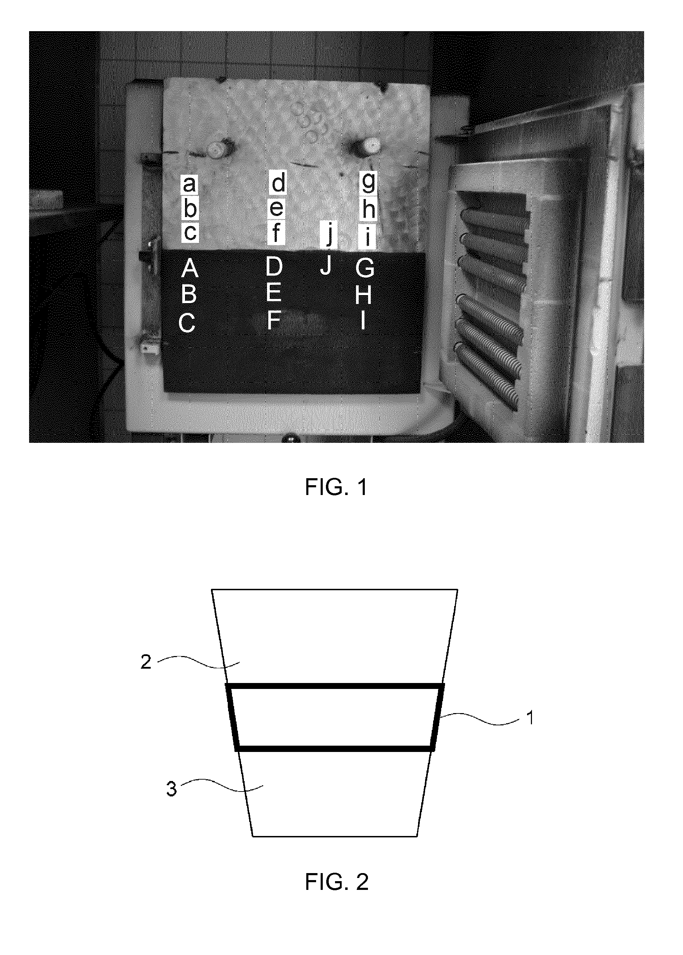

Bei diesem Versuch wurde eine Stahlplatte (Dicke = 3 mm) vor die Öffnung eines Hochtemperatur-Ofens gehangen. Dieses ist in FIG. 1 dargestellt. Der obere Bereich der Stahlplatte blieb unbehandelt, während der untere Teil mit einer Mischung aus Silikonharz-Lack (Meyer zu Natrup GmbH) und Quarzsand angestrichen wurde (Gewichtsverhältnis Lack:Sand = 1:1,3).

Der Ofen wurde auf 280 °C aufgeheizt, dann geöffnet und anschließend wurde die Stahlplatte davor gehangen. Als nach 20 Minuten Wartezeit die Temperaturanzeige des Ofens nur noch 230 °C anzeigte, wurde mit der Temperaturmessung begonnen. Die einzelnen Messpunkte sind in FIG. 1 zu sehen. Die zusammengehörenden Messpunkte (zum Beispiel a, A) wurden dabei direkt nacheinander gemessen.

Die Messungen wurden mit einem Messgerät 830-T4 der Firma Testo mit einem kalibrierten Oberflächenfühler durchgeführt (Kontaktmessung). Man erhielt die folgenden Ergebnisse:

| **Messwerte an blanker Oberfläche (Vergleich)** | **Messwerte an lackierter Oberfläche (erfindungsgemäß)** | **Differenz** |
|---|---|---|
| a: 104,0 °C | A: 77,1 °C | 26,9 °C |
| b: 110,0 °C | B: 57,8 °C | 52,2 °C |
| c: 102,5 °C | C: 52,5 °C | 50,0 °C |
| d: 127,0 °C | D: 91,6 °C | 35,4 °C |
| e: 108,0 °C | E: 82,0 °C | 26,0 °C |
| f: 108,0 °C | F: 60,0 °C | 48,0 °C |
| g: 123,0 °C | G: 86,6 °C | 36,4 °C |
| h: 117,0 °C | H: 71,0 °C | 46,0 °C |
| i: 103,0 °C | I: 57,0 °C | 46,0 °C |
| | | |
| j: 104,0 °C | J: 91,3 °C | 12,7 °C |

Der durchschnittliche Temperaturunterschied ohne die "Ausreißer"-Werte für j und J betrug 40,1 °C. Man erkennt folglich, dass die erfindungsgemäße Beschichtung eine erhöhte Wärmeabfuhr an den entsprechenden Stellen der Stahlplatte bewirkt.

### Beispiel 2

Eine herkömmliche Gießpfanne für Metallschmelzen (Vergleichspfanne) und eine mit einer erfindungsgemäßen Mischung aus Silikonharz-Lack (Meyer zu Natrup GmbH) und Quarzsand (Gewichtsverhältnis Lack:Sand = 1: 1,3) an der Außenseite versehene Gießpfanne für Metallschmelzen (erfindungsgemäße Pfanne) wurden erhitzt.

Nach einer Anwärmphase von ca. 40 bis 50 Minuten wurden Oberflächentemperaturen mittels Kontaktmessung (Messgerät 830-T4 der Firma Testo) sowie einer Wärmebildkamera bestimmt. Die Lage der Mess-Stellen ist schematisch in FIG. 2 dargestellt: eine Gießpfanne ist mit einem Tragring 1 versehen. Oberhalb des Tragrings 1 befinden sich die Messpunkte 2 für die erste Temperatur "Temp. 1", unterhalb des Tragrings diejenigen für die zweite Temperatur "Temp. 2". Beide Temperaturen wurden an der Ausguss-Seite gemessen. Zeitlich nacheinander wurden die Messungen Nr. 1 bis Nr. 6 durchgeführt.

Die erhaltenen Ergebnisse sind in den nachfolgenden Tabellen aufgeführt.

| **Kontaktmessung** | | | | |
|---|---|---|---|---|
| | **Vergleichspfanne** | | **Erfindungsgemäße Pfanne** | |
| | **Temp. 1 [°C]** | **Temp. 2 [°C]** | **Temp. 1 [°C]** | **Temp. 2 [°C]** |
| **Messung Nr.** | | | | |
| **1** | 270 | 391 | 288 | 340 |
| **2** | 356 | 431 | 295 | 298 |
| **3** | 353 | 455 | 303 | 317 |
| **4** | 352 | 465 | 323 | 343 |
| **5** | 394 | 475 | 335 | 340 |
| **6** | 338 | 470 | 333 | 365 |

| **Wärmebildkamera** | | | | |
|---|---|---|---|---|
| | **Vergleichspfanne** | | **Erfindungsgemäße Pfanne** | |
| | **Temp. 1 [°C]** | **Temp. 2 [°C]** | **Temp. 1 [°C]** | **Temp. 2 [°C]** |
| **Messung Nr.** | | | | |
| **1** | | | 362 | 427 |
| **2** | 419 | 470 | 390 | 402 |
| **3** | 424 | 477 | 382 | 403 |
| **4** | 471 | 488 | 407 | 441 |
| **5** | 465 | 506 | 416 | 438 |
| **6** | 447 | 506 | 405 | 464 |

Als Ergebnis lässt sich festhalten, dass die gemessenen Außentemperaturen der erfindungsgemäßen beschichteten Panne tendenziell um 10 bis 20% unterhalb der Außentemperaturen der Serienpfanne lagen.

## Patentansprüche

1. Beschichtungszusammensetzung, umfassend ein Silikonharz, **dadurch gekennzeichnet, dass** die Beschichtungszusammensetzung weiterhin Sand umfasst.

2. Beschichtungszusammensetzung gemäß Anspruch 1, wobei der Sand ein Quarz-, Basalt-, Dolomit-, Feldspat-, Glimmer-, Ilmenit-, Kalzit-, Bauxit-, Andalusit-, Zirkoniumsilikat-, Zirkoniumdioxid-, Magnesit-, Korund-, Spinell-, Siliciumcarbid- und/oder Siliciumnitrid-Sand ist.

3. Beschichtungszusammensetzung gemäß Anspruch 1 oder 2, wobei das Silikonharz ein Methylsilikonharz, Phenylsilikonharz oder Methylphenylsilikonharz ist.

4. Beschichtungszusammensetzung gemäß einem oder mehreren der Ansprüche 1 bis 3, wobei das Gewichtsverhältnis von Sand zu Silikonharz in einem Bereich von ≥ 1:1 bis ≤ 1,5:1 liegt.

5. Behälter für Metallschmelzen, umfassend eine nach Außen gerichtete äußere Oberfläche, **dadurch gekennzeichnet, dass** die äußere Oberfläche zumindest teilweise mit einer Beschichtung versehen ist, welche ein polymeres Bindemittel und Sand umfasst.

6. Behälter gemäß Anspruch 5, wobei die Beschichtung aus einer Beschichtungszusammensetzung gemäß einem oder mehreren der Ansprüche 1 bis 4 erhältlich ist.

7. Behälter gemäß Anspruch 5 oder 6, wobei der Behälter eine Gießpfanne, ein Vergießofen, eine Abstichrinne, ein Vorherd oder ein Kupolofen ist.

8. Verfahren zur Herstellung eines Behälters für Metallschmelzen, umfassend den Schritt des Auftragens einer Beschichtungszusammensetzung auf zumindest einen Teil einer nach Außen gerichteten äußeren Oberfläche eines Behälters für Metallschmelzen, wobei die Beschichtungszusammensetzung ein Polymerharz und Sand umfasst.

9. Verwendung einer Beschichtungszusammensetzung umfassend ein Polymerharz und Sand zur Beeinflussung der Wärmeabfuhr und/oder der Beeinflussung der Außentemperatur eines Behälters für Metallschmelzen.

10. Verwendung gemäß Anspruch 9, wobei die Beschichtungszusammensetzung eine Beschichtungszusammensetzung gemäß einem oder mehreren der Ansprüche 1 bis 4 umfasst.

11. Wärmetauscher, umfassend eine zur Abgabe von Wärme an ein Kühlmedium eingerichtete Oberfläche, **dadurch gekennzeichnet, dass** diese Oberfläche zumindest teilweise mit einer Beschichtung versehen ist, welche ein Silikonharz und Sand umfasst und wobei der Sand einen D₅₀-Wert der Korngrößenverteilung, ermittelt gemäß DIN EN 933, von ≥ 0,3 mm aufweist.

12. Wärmetauscher gemäß Anspruch 11, wobei der Wärmetauscher zur Aufnahme eines strömenden Fluids eingerichtet ist.

13. Wärmetauscher gemäß Anspruch 11 oder 12, wobei der Wärmetauscher ausgewählt ist aus der Gruppe Kühlbleche, vorzugsweise Kühlbleche für Motoren oder elektronische Bauelemente; Wasserleitungen, vorzugsweise Wasserleitungen für Wärmetauscher; Abkühlbecken; Abgasleitungen hinter Schmelzaggregaten.

14. Wärmetauscher gemäß einem oder mehreren der Ansprüche 11 bis 13, wobei das Silikonharz ein Methylsilikonharz, Phenylsilikonharz oder Methylphenylsilikonharz ist.

15. Verwendung einer Beschichtungszusammensetzung umfassend ein Silikonharz und Sand mit einem D₅₀-Wert der Korngrößenverteilung, ermittelt gemäß DIN EN 933, von ≥ 0,3 mm zur Beeinflussung der Wärmeabfuhr und/oder der Beeinflussung der Außentemperatur eines Wärmetauschers.
